Europäisches Patentamt

European Patent Office

Office européen des brevets

(19)

(11) Publication number: **0 168 664**
**A2**

(12) # EUROPEAN PATENT APPLICATION

(21) Application number: **85107578.8**

(22) Date of filing: **19.06.85**

(51) Int. Cl.⁴: **G 01 B 11/27**

(30) Priority: **18.07.84 GB 8418334**

(43) Date of publication of application: **22.01.86**
**Bulletin 86/4**

(84) Designated Contracting States: **AT BE CH DE FR GB IT LI LU NL SE**

(71) Applicant: **BRAMALL LASER SYSTEMS LIMITED, Copster Buildings Thurgoland, Sheffield, S30 4PA (GB)**

(72) Inventor: **Bramall, Stephen Norman, 1 Ivy Bank, Thurgoland Sheffield (GB)**

(74) Representative: **Houghton, David et al, Hulse & Co. Cavendish Buildings West Street, Sheffield, S1 1ZZ (GB)**

(54) **Position indicating system.**

(57) The invention relates to a position indicating system employing an alignment laser beam. The object of the invention is to provide such a system with a means of detecting and correcting any error in the x-axis direction additional to detecting and correcting any error in the y-axis direction, which objective is met by a system in which a beam splitter is located in the path of the laser beam to provide a primary beam for the purpose of establishing a datum line and to create a secondary beam for projection on to a target. Thus, with the primary beam set in its required direction, the target is located such that the secondary beam is at its centre, and when any deviation of the primary beam direction is automatically signalled by movement of the secondary beam from the centre of its target.

0168664

POSITION INDICATING SYSTEM

This invention relates to a position indicating system employing an alignment laser beam or beams, and is particularly, but not necessarily exclusively, concerned with the alignment of tunnels during boring or alignment during pipe jacking.

Alignment lasers are already well known, and have the advantage of providing a continuous reference beam projected along, e.g., a tunnel, during boring, for correct alignment of the axis of the tunnel in respect of both the so-called x- and y- axes directions. So long as the beam is correctly set, such systems are highly efficient but a major difficulty particularly when tunnel boring stems from the fact that the laser beam generating equipment must be installed in the tunnelling shaft at the beginning of the tunnel. Because of the unavoidable activity and vibration in that area, it is almost inevitable that the beam direction will be disturbed in either or both of the x- and y- axes directions. The majority of such equipment is equipped with an automatic self-levelling capabiity, allowing errors in the y-axis direction to be corrected, but there is no system known to date capable of detecting and correcting an x-axis error and it is common practice that this must be tested manually such as by using a theodolite followed by any necessary readjustment of the laser beam to re-establish the required datum line.

The object of the present invention is to provide relatively simple means for the continuous monitoring of the x-axis alignment of a laser beam.

According to the present invention, a position indicating system using an alignment laser beam comprises a beam splitter located in the beam path to provide a primary beam for the purpose of establishing a datum line and a secondary beam for projection onto a target. Preferably, the beam splitter is an optical prism.

Thus in its application to tunnelling, the optical prism can be mounted in the output beam from a laser tube to provide a primary beam which can be set to indicate the required direction of the axis of the tunnel, and a secondary beam projecting from the prism at a pre-determined angle onto the inside periphery of the tunnel shaft. Once the primary beam has been set, a target can be placed on the inside wall of the tunnel shaft with the secondary beam at its centre. Preferably, the secondary beam is projected at a relatively shallow angle in any convenient direciton, it is preferably in a vertical direction above the primary beam.

Consequently, should there be any inadvertent misalignment created in respect of the primary beam, this is accompanied by automatic movement of the secondary beam, whether that misalignment is in the x-axis or y-axis, or a combination of both. The target may be a visual target, when movement of the secondary beam from the centre of the target gives an immediate fully visible indication that misalignment has taken place and when adjustment of the equipment to sight the secondary beam at the centre of its target automatically realigns the primary beam on the required datum line.

Alternatively, the target may be a light sensing detector means such as a number of photoelectric diodes capable of sensing movement of the secondary beam, the output from the diodes being capable of amplification and used to signal a required drive of an alignment motor associated with the laser producing equipment to bring the secondary beam, and hence the primary beam, back to a predetermined direction.

The invention will now be described by way of example only with reference to the accompanying schematic drawing indicating the entrance to a tunnel with the position indicating system of the invention located in the tunnel entrance.

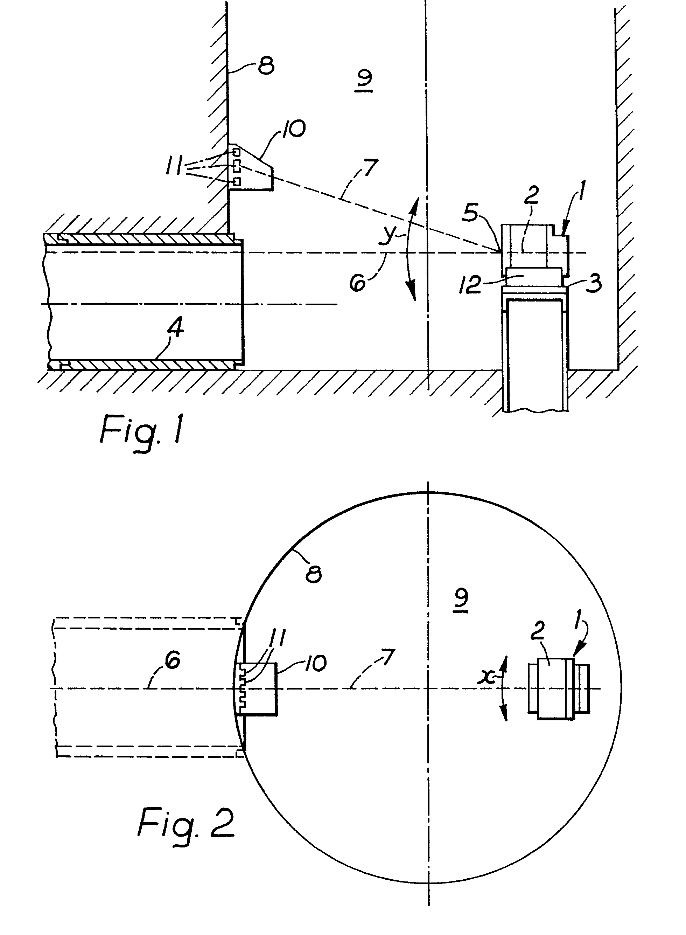

In the drawing, the position indicating system indicated at 1 represents a laser beam generating tube 2 adjustably mounted on support means 3 to locate the axis of the laser beam tube on the longitudinal axis of a tunnel 4 being bored.

At the end of the laser beam tube 2 is mounted a beam splitter 5 in the form of an optical prism, so oriented that with a laser beam being generated a primary beam 6 is formed, together with a secondary beam 7 extending at a shallow angle vertically above the primary beam.

At the onset of usage, any suitable and known means can be employed to ensure that the primary beam 6 is aligned with the longitudinal axis of the tunnel, and once alignment has been achieved, the laser beam tube 2 is locked in position. With the secondary beam 7 extending vertically above the primary beam, it is projected on to the wall 8 of the shaft 9, and following alignment of the primary beam, a target 10 is secured to the wall such that the secondary beam is at the target's centre.

With boring of the tunnel progressing, the unavoidable activity and vibration taking place at the bottom of the shaft close to the entrance to the tunnel will almost inevitably disturb the alignment of the primary beam 6 in the x- or y-directions or a combination of those directions but any such misalignment of the primary beam instantly causes the secondary beam 7 to move off the centre of the target 10, and by an appreciable distance because of the shallow angle of the secondary beam.

In its simplest form, the target is no more than a visual aid, and the laser beam tube 2 manually adjustable. Thus when an operative observes that the secondary beam 7 is not at the centre of its target 8, he effects immediate manual adjustment of the laser beam tube to bring it back to the centre, and when there is the automatic return of the primary beam to its required alignment with the axis of the tunnel.

In a somewhat more complex form, the target can be an array of light sensors such as photo electric cells11, and when any movement of the secondary beam from the centre of the target, generates an output from the cells on which the beam falls, either to activate an alarm to signal misalignment, or to drive an alignment motor indicated at 12 to return the secondary beam to the centre of the target and hence the primary beam to its required alignment with the axis of the tunnel.

The invention therefore provides an ability to monitor the direction of a primary laser beam, and provide an immediate indication that the preset direction of the laser beam has drifted in the x-, and y- directions, or any direction or combination of the x- and y- directions, from which it will readily be seen that with the laser beam used e.g. to control the boring machine of a tunnel, or the alignment of successive lengths of pipe, considerably greater surety is provided that the longitudinal axis of the tunnel or of the pipes is maintained in its predetermined direction.

CLAIMS

1.   A position indicating system using an alignment laser beam, characterised by a beam splitter (5) located in the beam path to provide a primary beam (6) for the purpose of establishing a datum line and a secondary beam (7) for projection on to a target (10).

2.   A position indicating system as in Claim 1, characterised in that the beam splitter (5) is an optical prism.

3.   A position indicating system as in Claim 1 or Claim 2, characterised in that the secondary beam (7) is projected at a relatively shallow angle in any convenient direction, with respect to the primary beam (6).

4.   A position indicating system as in Claim 3, characterised in that the secondary beam (7) lies vertically above the primary beam (6).

5.   A position indicating system as in any of Claims 1 to 4, characterised in that the target (10) is a visual target.

6.   A position indicating system as in any of Claims 1 to 4, characterised in that the target (10) is a light sensitive detector means.

7.   A position indicating system as in Claim 6, characterised in that the target comprises a number of photo electric diodes (11).

8.   A position indicating system as in any of Claims 1 to 7, characterised in that a laser beam generating tube (2) is manually adjustably mounted on a support.

9.   A position indicating system as in any of Claims 1 to 7, characterised in that a laser beam generating tube (2) is mounted on a support for adjustment by a drive motor (12).

1/1

0168664

Fig. 1

Fig. 2